# EUROPÄISCHE PATENTSCHRIFT

(11) **EP 2 115 277 B1**
(45) Veröffentlichungstag und Bekanntmachung des Hinweises auf die Patenterteilung: **07.07.2010**
(21) Anmeldenummer: 08707458.9
(22) Anmeldetag: 31.01.2008
(51) Int. Cl.: F01N 3/033, F01N 3/08, F01N 13/04

(54) **VERFAHREN ZUR REGENERATION VON RUSSFILTERN IN DER ABGASANLAGE EINES MAGERMOTORS UND ABGASANLAGE HIERFÜR**
METHOD FOR REGENERATING SOOT FILTERS IN THE EXHAUST GAS SYSTEM OF A LEAN MIX ENGINE, AND EXHAUST GAS SYSTEM THEREFOR
PROCÉDÉ DE RÉGÉNÉRATION DE FILTRES À PARTICULES DANS LE SYSTÈME D'ÉCHAPPEMENT D'UN MOTEUR POUR MÉLANGE PAUVRE ET SYSTÈME D'ÉCHAPPEMENT ASSOCIÉ

(30) Priorität: 31.01.2007 EP 07002040
(43) Veröffentlichungstag der Anmeldung: 11.11.2009
(73) Patentinhaber: Umicore AG & Co. KG, 63457 Hanau-Wolfgang (DE)
(72) Erfinder: ECKHOFF, Stephan, 63755 Alzenau (DE); GRISSTEDE, Ina, 63450 Hanau (DE); MUELLER, Wilfried, 61184 Karben (DE); KREUZER, Thomas, 61184 Karben (DE)
(86) Internationale Anmeldenummer: PCT/EP2008/000771
(87) Internationale Veröffentlichungsnummer: WO 2008/092691

(56) Entgegenhaltungen:
- DE-A1- 10 145 916
- DE-T5- 10 393 184
- FR-A- 2 810 073

## Beschreibung

Die Erfindung betrifft ein Verfahren zur Regeneration von Rußfiltern in der Abgasanlage eines Magermotors, mit welchem die Emission von Stickoxiden während der Regeneration vermindert werden kann.

Magermotoren werden während der überwiegenden Betriebsdauer mit einem mageren Luft/Kraftstoff Gemisch betrieben. Hierzu gehören Dieselmotoren und mager betriebene Ottomotoren.

Zur Verbesserung der Luftqualität wird die Abgasgesetzgebung in Europa und anderen Industriestaaten ständig verschärft. Nach dem Beschluß des Europaparlamentes sollen die Grenzwerte von Euro 5 ab 1. September 2009 für Neufahrzeuge verbindlich werden, die Grenzwerte von Euro 6 ab 1. September 2014. Mit Euro 5 wird für Dieselfahrzeuge ein Grenzwert für die Stickoxide von 180 mg/km und für die Rußpartikel von 5 mg/km festgelegt. Mit Euro 6 wird der Grenzwert für die Stickoxide auf 80 mg/km gesenkt. In Kalifornien gilt sogar schon ab 2007 ein Grenzwert von 50 mg NOx/Meile und 10 mg Ruß/Meile.

Magermotoren enthalten in ihrem Abgas als Schadstoffe unverbrannte Kohlenwasserstoffe, Kohlenmonoxid, Stickoxide und Ruß. Die vorgesehenen Grenzwerte für die Konzentration von Stickoxiden und Ruß im Abgas können nicht mehr allein mit innermotorischen Maßnahmen eingehalten werden, vielmehr ist zu diesem Zweck eine Abgasnachbehandlung notwendig: die Stickoxide können mit Stickoxid-Speicherkatalysatoren oder mit SCR-Katalysatoren umgesetzt und der Ruß mit einem Rußfilter herausgefiltert werden. Ein Rußfilter muß alle 500 bis 1000 km Fahrleistung regeneriert werden durch Anheben der Abgastemperatur auf mehr als 550 °C und Abbrennen des im Filter abgeschiedenen Rußes. Die etwa 15 Minuten dauernde Regeneration des Rußfilters erschwert allerdings die Einhaltung der Stickoxid-Grenzwerte: die katalytische Aktivität der verwendeten Katalysatoren zur Stickoxid-Reduktion ist bei hohen Temperaturen, wie sie bei der Filterregeneration auftreten, gering. Außerdem schädigen die hohen Abgastemperaturen die Katalysatoren.

Die vorliegende Erfindung befaßt sich mit der Abgasnachbehandlung bei einem Magermotor mit Katalysatoren zur Umsetzung der Stickoxide und mit einem Rußfilter. Die Katalysatoren zur Umsetzung der Stickoxide werden im folgenden auch als Entstickungskatalysatoren bezeichnet.

In der DE 103 93 184 T5 (entsprechend US 7,055,311 B2) wird eine zweiflutige Abgasreinigungsanlage für einen Dieselmotor mit mehreren Zylindern beschrieben. Die Abgasreinigungsanlage enthält eine erste Abgasleitung für die Abgase einer ersten Gruppe der Zylinder und eine zweite Abgasleitung für die Abgase einer zweiten Gruppe der Zylinder. In jeder Abgasleitung ist ein Stickoxid-Speicherkatalysator und gegebenenfalls ein Rußfilter angeordnet. Beide Abgasleitungen sind stromabwärts der Speicherkatalysatoren an einer Einmündung zu einer gemeinsamen Abgasleitung vereinigt. Die gemeinsame Abgasleitung enthält einen Oxidationskatalysator. Die Zusammensetzung der Abgase in der ersten und zweiten Abgasleitung wird unabhängig voneinander durch die elektronische Motorsteuerung eingestellt, so daß das Abgas in der einen Leitung zur Regeneration des Speicherkatalysators angefettet wird, während das Abgas in der anderen Leitung mager ist. Anfettung und Abmagerung werden so eingestellt, daß nach dem Zusammenführen beider Abgasströme in der gemeinsamen Abgasleitung ein mageres Abgas vorliegt und ein möglicher Schlupf des Reduktionsmittels am Oxidationskatalysator oxidiert wird.

Wie die Erfinder der vorliegenden Patentanmeldung feststellten, ist die Abgasreinigungsanlage der DE 103 93 184 T5 nicht in der Lage, die vom Motor emittierten Stickoxide während der Regeneration der Rußfilter zu unschädlichen Komponenten umzusetzen.

Aufgabe der Erfindung ist es daher, ein Verfahren zur Verfügung zu stellen, welches auch während der Regeneration der Rußfilter einen hohen Umsatz der Stickoxide gewährleistet und die Temperaturbelastung der Entstickungskatalysatoren während der Regeneration der Rußfilter vermindert. Außerdem ist es Aufgabe der Erfindung eine hierfür geeignete Abgasanlage anzugeben.

Diese Aufgabe wird durch das in Anspruch 1 beschriebene Verfahren gelöst. Bevorzugte Ausführungsformen der Erfindung sind in den abhängigen Ansprüchen beschrieben.

Das Verfahren setzt einen Magermotor mit mehreren Zylindern voraus, wobei eine erste Abgasleitung die Abgase einer ersten Gruppe von Zylindern und eine zweite Abgasleitung die Abgase einer zweiten Gruppe von Zylindern aufnimmt. Jede Abgasleitung enthält wenigstens ein Rußfilter. Beide Abgasleitungen münden stromabwärts der Rußfilter in eine gemeinsame Abgasleitung. Zur Umsetzung der Stickoxide enthält die gemeinsame Abgasleitung einen Entstickungskatalysator. Im Normalbetrieb des Motors liegen in beiden Abgasleitungen gleiche Abgasbedingungen vor; der vom Motor erzeugte Ruß wird von den Rußfiltern aus dem Abgas herausgefiltert und die Stickoxide werden vom Entstickungskatalysator umgesetzt. Das Verfahren zeichnet sich dadurch aus, daß beide Rußfilter zeitlich gegeneinander versetzt regeneriert werden. Hierzu wird die Temperatur des Abgases in der betreffenden Abgasleitung auf die Rußzündtemperatur angehoben, während in der anderen Abgasleitung weiterhin normale Abgasbedingungen vorliegen. In der gemeinsamen Abgasleitung werden beide Abgasströme gemischt. Das gemischte Abgas nimmt daher eine mittlere Temperatur an, die zwischen der Abgastemperatur des Normalbetriebs und der Abgastemperatur bei der Regeneration liegt. Die im gemischten Abgasstrom in der gemeinsamen Abgasleitung enthaltenen Stickoxide werden am Entstickungskatalysator zu unschädlichen Komponenten umgesetzt.

Der Normalbetrieb des Motors bezeichnet die Betriebszustände während normaler Fahrt mit dem Fahrzeug im Stadtverkehr und bei nicht zu schneller Autobahnfahrt. Die Abgastemperatur liegt für diese Betriebszustände im Bereich zwischen 150 und 400 °C. Hiervon zu unterscheiden ist der Regenerationsbetrieb für das Abbrennen des Rußes auf einem der beiden Rußfilter. Die Abgastemperatur und damit die Temperatur des Rußfilters muß zu diesem Zweck auf die Rußzündtemperatur angehoben werden. Die Höhe der Rußzündtemperatur hängt davon ab, ob das Rußfilter mit einer Rußzündbeschichtung versehen ist oder nicht. In der Regel liegt die Rußzündtemperatur oberhalb der Abgastemperatur im Normalbetrieb.

Im Normalbetrieb werden beide Gruppen von Zylindern mit einem mageren Luft/Kraftstoff-Gemisch betrieben. Das Abgas ist daher in beiden Abgasleitungen mager. Zur Regeneration eines der Rußfilter durch Verbrennen des Rußes muß die Abgastemperatur in der entsprechenden Abgasleitung auf die Rußzündtemperatur angehoben werden. Die zugeordnete Gruppe von Zylindern wird dabei weiterhin mit einem mageren Luft/Kraftstoff Gemisch betrieben. Somit bleibt das Abgas mager und ist in der Lage, den Ruß zu oxidieren. Gemäß dem Verfahren bleibt also das Abgas in beiden Abgasleitungen während der Regeneration der Filter mager.

In konventionellen Abgasreinigungsanlagen sind die Entstickungskatalysatoren vor oder hinter dem Rußfilter im gleichen Abgasstrang angeordnet und werden daher während einer Filterregeneration mit demselben heißen Abgas wie das Filter belastet. Bei diesen hohen Temperaturen ist die katalytische Aktivität der Stickoxid-Speicherkatalysatoren gering, so daß die im Abgas enthaltenen Stickoxide kaum umgesetzt werden. Die positive Wirkung der Erfindung beruht nun darauf, daß das relativ kalte Abgas aus dem Normalbetrieb der einen Gruppe von Zylindern mit dem heißen Abgas aus dem Regenerationsbetrieb der anderen Gruppe von Zylindern gemischt wird, bevor es über den Entstickungskatalysator geleitet wird. Dadurch liegt die sich ergebende Abgastemperatur der gemischten Abgasströme innerhalb des optimalen Temperaturbereiches des Entstickungskatalysators und ermöglicht damit einen guten Umsatz der Stickoxide. Außerdem wird hierdurch die thermische Alterung des Entstickungskatalysators verringert.

Für die Erfindung geeignete Entstickungskatalysatoren und ihre Betriebsweisen sind dem Fachmann bekannt. Hierzu gehören Stickoxid-Speicherkatalysatoren, SCR-Katalysatoren und HC-DeNOx-Katalysatoren.

Bei Einsatz von Stickoxid-Speicherkatalysatoren muß der Magermotor im zyklischen Wechsel mit magerem und fettem Abgas betrieben werden. In der Magerphase, die etwa 1 bis 2 Minuten dauert werden die im Abgas enthaltenen Stickoxide auf dem Speicherkatalysator gespeichert und während der Fettphase wieder freigesetzt und mit den reduzierenden Bestandteilen des fetten Abgases (unverbrannte Kohlenwasserstoffe, Kohlenmonoxid und Wasserstoff) zu Stickstoff, Kohlendioxid und Wasser umgesetzt. Die Fettphase dauert nur wenige Sekunden. Die optimale Arbeitstemperatur eines Stickoxid-Speicherkatalysators liegt im Bereich zwischen 250 und 400 °C. Durch Abgastemperaturen oberhalb von 550 °C werden Stickoxid-Speicherkatalysatoren thermisch geschädigt.

Die Arbeitsweise von Stickoxid-Speicherkatalysatoren wird ausführlich in der SAE-Schrift SAE 950809 beschrieben. Demnach wird während der Magerphase das im Abgas enthaltene Stickstoffmonoxid zu Stickstoffdioxid oxidiert und anschließend als Nitrat gespeichert. Zur Oxidation von Stickstoffmonoxid enthält ein Speicherkatalysator als katalytisch aktive Komponenten gewöhnlich Platin und gegebenenfalls Palladium. Zur Speicherung der Stickoxide als Nitrate dienen basische Oxide, Karbonate oder Hydroxide von Alkalimetallen, Erdalkalimetallen und Seltenerdmetallen; bevorzugt werden basische Verbindungen des Bariums und Strontiums eingesetzt. Geeignete Stickoxid-Speicherkatalysatoren werden zum Beispiel in dem Patent der Anmelderin US 6858193 B2 beschrieben.

SCR-Katalysatoren können die im sauerstoffhaltigen Abgas enthaltenen Stickoxide bei Zusatz von Ammoniak selektiv zu Stickstoff reduzieren. Hierfür muß der Ammoniak oder eine zu Ammoniak zersetzbare Verbindung vor dem SCR-Katalysator in das Abgas eingedüst werden. SCR-Katalysatoren enthalten als katalytisch aktive Komponenten saure Oxide wie zum Beispiel Titanoxid, Wolframoxid und Vanadiumoxid. Gut geeignet sind auch Zeolithe, die mit Unedelmetallen, besonders mit Eisen oder Kupfer, ausgetauscht sind. Zeolithe weisen ein besonders hohes Speichervermögen für Ammoniak auf, was sich positiv auf ihre Toleranz gegenüber Schwankungen der Abgaszusammensetzung im dynamischen Betrieb des Magermotors auswirkt. Die optimale Betriebstemperatur von SCR-Katalysatoren liegt etwa zwischen 300 und 500 °C. Mit ihnen können Umsatzwirkungsgrade bis über 90 % erreicht werden.

HC-DeNOx-Katalysatoren können ebenfalls die im sauerstoffhaltigen Abgas enthaltenen Stickoxide umsetzen. Als Reduktionsmittel dienen in diesem Fall die im Abgas enthaltenen Kohlenwasserstoffe oder zusätzlich ins Abgas eingedüste Kohlenwasserstoffe oder deren Zersetzungsprodukte. Zu diesem Zweck kann zum Beispiel Kraftstoff in das Abgas eingedüst werden. Die Selektivität der Reduktion von Stickoxiden mit Kohlenwasserstoffen ist wesentlich geringer als die Reduktion von Stickoxiden mit Ammoniak. Deshalb liegen die Umsatzwirkungsgrade dieser Katalysatoren nur etwa bei 20 bis 60 %. Geeignete HC-DeNOx-Katalysatoren sind zum Beispiel mit Kupfer ausgetauschte Zeolithe oder geträgerte Platinkatalysatoren. Ihr optimaler Arbeitsbereich liegt je nach Zusammensetzung zwischen 150 und 250 °C bei platinhaltigen Katalysatoren und 300 und 500 °C bei Katalysatoren auf Zeolithbasis.

Für die Zwecke der Erfindung können alle bekannten Rußfilter für Abgase aus Magermotoren eingesetzt werden. Besonders geeignet sind sogenannte Wandflußfilter aus Keramik wie zum Beispiel Cordierit, Aluminiumtitanat und Siliziumkarbid. Der Ruß lagert sich dabei auf den Wänden der Strömungskanäle der Filterkörper ab. Dadurch erhöht sich kontinuierlich der Abgasgegendruck. Bei Erreichen eines vorgegebenen Grenzwertes für den Abgasgegendruck muß das Filter durch Abbrennen des Rußes regeneriert werden. Hierzu muß die Temperatur des Abgases auf die Rußzündtemperatur erhöht werden. Sie liegt bei etwa 650 °C. Sie kann durch Beschichten des Rußfilters mit einer geeigneten katalytischen Masse, einer sogenannten Rußzündbeschichtung, um 50 bis 150 ° vermindert werden. Für die Zwecke der Erfindung sind sowohl beschichtete als auch unbeschichtete Filter einsetzbar.

Zur Erhöhung der Abgastemperatur am Ort des Filters sind verschiedene Maßnahmen geeignet. Die Abgastemperatur kann zum Beispiel durch motorische Maßnahmen auf die Rußzündtemperatur erhöht werden. Hierzu gehören das Nacheinspritzen von Kraftstoff, das Einstellen einer späten Verbrennungslage, eine mehrstufige Verbrennung oder eine Kombination dieser Maßnahmen. Alternativ hierzu kann das Rußfilter auch durch externe Beheizung, wie zum Beispiel eine elektrische Beheizung, auf die Rußzündtemperatur aufgeheizt werden. Eine andere Möglichkeit besteht darin, die Rußfilter mit einem Oxidationskatalysator zu beschichten und die Abgastemperatur auf die Rußzündtemperatur anzuheben durch Eindüsen von Kohlenwasserstoffen oder deren Zersetzungsprodukten vor dem jeweiligen Rußfilter und katalytische Verbrennung der Kohlenwasserstoffe oder ihrer Zersetzungsprodukte an der katalytischen Beschichtung des Filters.

Die erfindungsgemäße Anordnung von Rußfiltern und Entstickungskatalysator kann durch weitere Katalysatoren ergänzt werden. So können vor den Rußfiltern Oxidationskatalysatoren angeordnet werden. Sie verbrennen die im Abgas noch eventuell enthaltenen unverbrannten Kohlenwasserstoffe und Kohlenmonoxid. Sie eignen sich auch zum Aufheizen der nachgeschalteten Rußfilter für die Regenerierung. Hierzu wird zusätzlicher Kraftstoff vor dem jeweiligen Oxidationskatalysator in die Abgasleitung eingedüst, auf dem Oxidationskatalysator verbrannt und so die Abgastemperatur auf die Rußzündtemperatur angehoben. Oxidationskatalysatoren enthalten vor allem Platin und/oder Palladium als katalytisch aktive Komponente und sind dem Fachmann bekannt.

Weiterhin kann die Stickoxidumsetzung dadurch verbessert werden, daß vor oder hinter jedem Rußfilter noch ein Stickoxid-Speicherkatalysator angeordnet wird. Werden diese Stickoxid-Speicherkatalysatoren vor den Filtern angeordnet, oder werden die Filter mit diesen Stickoxid-Speicherkatalysatoren beschichtet, so kann ihre Oxidationswirkung unter mageren Abgasbedingungen auch dazu benutzt werden, um, wie soeben für Oxidationskatalysatoren beschrieben, die Temperatur des Filters durch Verbrennen von eingedüsten Kohlenwasserstoffen auf die Rußzündtemperatur zu erhöhen. In diesem Fall kann nach der Regeneration der Rußfilter auch eine Entschwefelung der Stickoxid-Speicherkatalysatoren angeschlossen werden, für die ebenfalls sehr hohe Abgastemperaturen benötigt werden. Allerdings muß zur Entschwefelung das Abgas angefettet werden. Dieser Verfahrensablauf wird im europäischen Patent EP 1154130 B1 der Anmelderin beschrieben: nach der Regeneration der Rußfilter wird das Abgas angefettet und die Stickoxid-Speicherkatalysatoren werden entschwefelt.

Gegenüber dem Betriebsverfahren der in der DE 103 93 184 T5 beschriebenen Abgasreinigungsanlage weist das erfindungsgemäße Verfahren erhebliche Vorteile auf. Gemäß der DE 103 93 184 T5 werden auch die gegebenenfalls zusätzlich zu den Stickoxid-Speicherkatalysatoren vorhandenen Rußfilter abwechselnd von Zeit zu Zeit durch Anheben der Abgastemperatur in der entsprechenden Abgasleitung auf über 550 °C regeneriert. Bei dieser Temperatur ist der in dieser Abgasleitung angeordnete Entstickungskatalysator jedoch nicht mehr in der Lage, die vom Motor emittierten Stickoxide zu speichern. Sie werden daher über den in der gemeinsamen Abgasleitung befindlichen Oxidationskatalysator an die Umwelt abgegeben. Verschärfend kommen hier noch folgende Gesichtspunkte hinzu: Das chemische Gleichgewicht zwischen NO und NO₂ liegt bei einer Abgastemperatur von 550 °C fast vollständig auf der Seite des weniger umweltschädlichen Stickstoffmonoxids. Wird nun dieses Abgas mit dem kühleren Abgas aus der zweiten Abgasleitung gemischt und über den Oxidationskatalysator in der gemeinsamen Abgasleitung geführt, so wird das enthaltene Stickstoffinonoxid wegen der geringeren Mischtemperatur mit hoher Effektivität zu dem sehr umweltschädlichen Stickstoffdioxid oxidiert. Weiterhin wird man zur Kraftstoffeinsparung die Regeneration der Rußfilter bevorzugt bei Betriebspunkten des Motors mit hoher Last vornehmen, bei denen die Abgastemperatur von vornherein relativ hoch ist. In solchen Betriebspunkten emittiert der Dieselmotor jedoch von sich aus schon höhere Anteile von Stickoxiden. Bei dieser Abgasreinigungsanlage sind also während der Regeneration der Rußfilter deutlich erhöhte NO₂-Emissionen zu erwarten. Dagegen ist das hier vorgeschlagene Verfahren in der Lage, die Stickoxid-Emissionen während der Regeneration der Rußfilter effektiv zu vermindern.

Die Erfindung wird im folgenden an Hand der Figuren 1 bis 2 näher erläutert. Es zeigen:
- **Figur 1:**: Typische Aktivitätskurven verschiedener Entstickungskatalysatoren
- **Figur 2:**: Abgasreinigungsanlage zur Durchführung des Verfahrens zur Regeneration eines Rußfilters mit verminderter Emission von Stickoxiden
- **Figur 3:**: Eine weitere Ausführungsform der Abgasreinigungsanlage zur Durchführung des Verfahrens zur Regeneration mit verminderter Emission von Stickoxiden

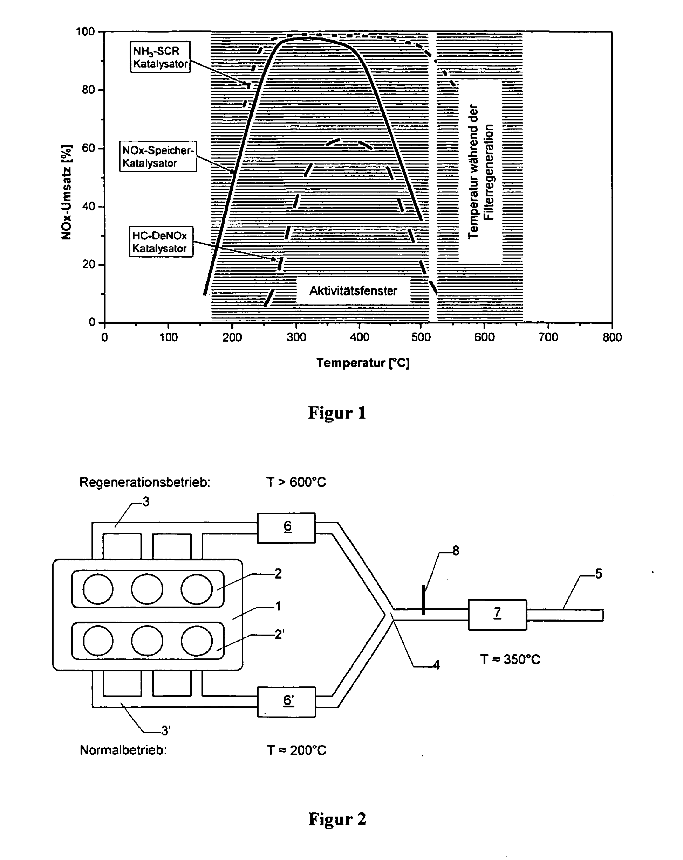

Figur 1 zeigt die Aktivitätskurven verschiedener für die Erfindung geeigneter Entstickungskatalysatoren. Innerhalb eines Aktivitätsfensters steigt der Stickoxidumsatz beginnend von niedrigen Abgastemperaturen mit der Temperatur steil an, durchläuft ein mehr oder weniger breites Maximum und fällt dann bei hohen Temperaturen wieder schnell ab. Wie Figur 1 zeigt, liegt das Temperaturintervall für die Regeneration eines Rußfilters oberhalb der Aktivitätsfenster von Entstickungskatalysatoren. Die Aktivität der Entstickungskatalysatoren ist bei der Regenerationstemperatur schon stark abgesunken, so daß ohne zusätzliche Maßnahmen während der Regeneration des Filters ein Großteil der im Abgas enthaltenen Stickoxide unbehandelt emittiert wird, wenn sich Rußfilter und Entstickungskatalysatoren im gleichen Abgasstrang befinden.

Figur 2 zeigt eine Abgasreinigungsanlage zur Durchführung des erfindungsgemäßen Verfahrens. Bezugsziffer (1) bezeichnet einen Magermotor mit zwei Zylinderbänken (2) und (2'). Die Abgase dieser Zylinderbänke werden in die beiden Abgasleitungen (3) und (3') abgegeben. An der Einmündung (4) sind die beiden Abgasleitung (3) und (3') zu einer gemeinsamen Abgasleitung (5) vereinigt. Der im Abgas des Magermotors enthaltene Ruß wird von den Rußfiltern (6) und (6') aus dem Abgas herausgefiltert. Zur Umsetzung der vom Magermotor (1) emittierten Stickoxide enthält die gemeinsame Abgasleitung einen Entstickungskatalysator (7). Hierbei kann es sich um einen Stickoxid-Speicherkatalysator, einen SCR-Katalysator oder einen HC-DeNOx-Katalysator handeln. Die Stickoxide in der gemeinsamen Abgasleitung werden also durch einen SCR-Katalysator, einen Stickoxid-Speicherkatalysator oder einen HC-DeNOx-Katalysator entfernt.

Im Falle eines SCR-Katalysators befindet sich vor dem Katalysator eine Dosiereinrichtung (8) zur Eindüsung von Ammoniak oder einer zu Ammoniak zersetzlichen Verbindung.

In Figur 2 ist angenommen, daß das Rußfilter (6) regeneriert werden muß. Die Zylinderbank (2) wird daher so betrieben, daß die Abgastemperatur mehr als 600 °C beträgt und der Abbrand des Rußes gezündet werden kann. Während der Regeneration von Rußfilter (6) wird die zweite Zylinderbank (2') entsprechend dem augenblicklichen Fahrzustand des Fahrzeuges "normal" betrieben. In Figur 2 ist angenommen, daß das Abgas in diesem Betriebszustand eine Temperatur von etwa 200 °C aufweist. Beide Abgasströme vermischen sich an der Einmündung (4) zu einem gemeinsamen Abgasstrom mit einer Mischtemperatur von etwa 350 °C.

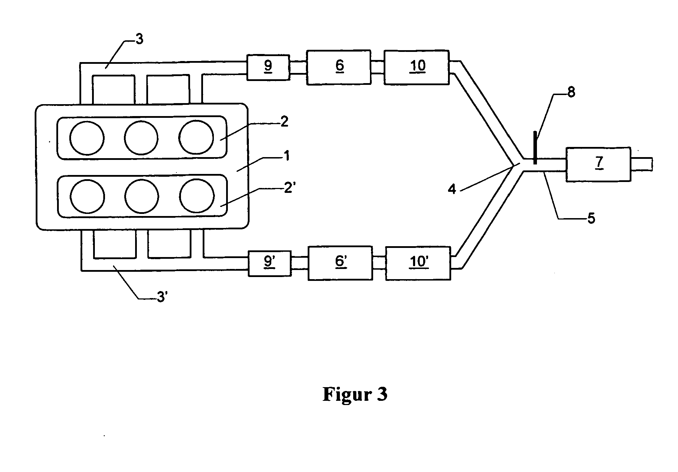

Figur 3 zeigt eine Variante der Abgasreinigungsanlage zur Durchführung des Verfahrens. Vor den Rußfiltern (6) und (6') ist jeweils ein Oxidationskatalysator oder ein Stickoxid-Speicherkatalysator (9) und (9') in die Abgasleitungen eingefügt. Außerdem kann hinter den Rußfiltern ein Entstickungskatalysator wie zum Beispiel jeweils ein Stickoxid-Speicherkatalysator (10) und (10') angeordnet sein.

Bei diesen Varianten der Abgasreinigungsanlage wird das Abgas in der ersten und zweiten Abgasleitung zunächst über einen Oxidationskatalysator (9 und 9') und danach über das Rußfilter (6 und 6') geführt. Anschließend kann das Abgas noch über einen Stickoxid-Speicherkatalysator (10 und 10') geführt werden.

Ferner kann hinter dem Entstickungskatalysator (7) noch ein Oxidationskatalysator nachgeschaltet sein, der den Schlupf von Reduktionsmittel in die Atmosphäre vermindern kann.

In den Figuren 2 und 3 wurde davon ausgegangen, daß der Magermotor zwei separate Zylinderbänke aufweist, die ihre Abgase in entsprechend zugeordnete Abgasleitungen abgeben. Das Verfahren kann jedoch auch bei einem Reihenmotor angewendet werden. Es muß nur dafür gesorgt werden, daß die Abgase der Zylinder in zwei getrennte Abgasleitungen eingegeben werden.

## Patentansprüche

1. Verfahren zum Regenerieren von Rußfiltern in der Abgasanlage eines Magermotors (1) mit mehreren Zylindern, wobei eine erste Abgasleitung (3) die Abgase einer ersten Gruppe von Zylindern (2) und eine zweite Abgasleitung (3') die Abgase einer zweiten Gruppe von Zylindern (2') aufnimmt und jede Abgasleitung ein Rußfilter (6 und 6') enthält und beide Abgasleitungen stromabwärts der Rußfilter in eine gemeinsamen Abgasleitung (5) münden und die Abgase der beiden Gruppen von Zylindern gemischt werden, wobei im Normalbetrieb des Motors in beiden Abgasleitungen gleiche Abgasbedingungen vorliegen, und der vom Motor erzeugte Ruß von den Rußfiltern aus dem Abgas herausgefiltert wird,
**dadurch gekennzeichnet,**
**daß** beide Rußfilter (6 und 6') zeitlich gegeneinander versetzt regeneriert werden durch Anheben der Abgastemperatur in der zugeordneten Abgasleitung auf eine Rußzündtemperatur, während in der anderen Abgasleitung weiterhin normale Abgasbedingungen vorliegen, so daß die Abgastemperatur in der gemeinsamen Abgasleitung (5) eine mittlere Temperatur zwischen der Abgastemperatur des Normalbetriebs und der Abgastemperatur bei Regeneration annimmt und die im gemischten Abgasstrom enthaltenen Stickoxide an einem Entstickungskatalysator (7) umgesetzt werden.

2. Verfahren nach Anspruch 1,
**dadurch gekennzeichnet,**
**daß** die Abgastemperatur zur Regeneration der Rußfilter durch motorische Maßnahmen auf die Rußzündtemperatur angehoben wird.

3. Verfahren nach Anspruch 2,
**dadurch gekennzeichnet,**
**daß** die Abgastemperatur durch Nacheinspritzen von Kraftstoff, durch eine späte Verbrennungslage, durch eine mehrstufige Verbrennung oder durch eine Kombination dieser Maßnahmen auf die Rußzündtemperatur angehoben wird.

4. Verfahren nach Anspruch 1,
**dadurch gekennzeichnet,**
**daß** die Abgastemperatur zur Regeneration der Rußfilter durch externe Beheizung auf Rußzündtemperatur angehoben wird.

5. Verfahren nach Anspruch 1,
**dadurch gekennzeichnet,**
**daß** die Rußfilter mit einem Oxidationskatalysator beschichtet sind und die Abgastemperatur auf die Rußzündtemperatur angehoben wird durch Eindüsen von Kohlenwasserstoffen oder deren Zersetzungsprodukten vor dem jeweiligen Rußfilter und katalytische Verbrennung der Kohlenwasserstoffe oder ihrer Zersetzungsprodukte am Oxidationskatalysator.

6. Verfahren nach Anspruch 1,
**dadurch gekennzeichnet,**
**daß** die erste und zweite Abgasleitung vor den Rußfiltern jeweils einen Oxidationskatalysator enthalten und die Abgastemperatur auf die Rußzündtemperatur angehoben wird durch Eindüsen von Kohlenwasserstoffen oder deren Zersetzungsprodukten vor dem jeweiligen Oxidationskatalysator und katalytische Verbrennung der Kohlenwasserstoffe oder ihrer Zersetzungsprodukte am Oxidationskatalysator.

7. Verfahren nach Anspruch 1,
**dadurch gekennzeichnet,**
**daß** die Rußzündtemperatur durch Beschichten der Rußfilter (6 und 6') mit einer Rußzündbeschichtung herabgesetzt wird.

8. Verfahren nach Anspruch 1,
**dadurch gekennzeichnet,**
**daß** die Stickoxide in der gemeinsamen Abgasleitung durch einen SCR-Katalysator, einen Stickoxid-Speicherkatalysator oder einen HC-DeNOx-Katalysator als Entstickungskatalysator entfernt werden.

9. Verfahren nach Anspruch 1,
**dadurch gekennzeichnet,**
**daß** das Abgas in der ersten und zweiten Abgasleitung zunächst über einen Oxidationskatalysator (9 und 9') und danach über das Rußfilter (6 und 6') geführt wird.

10. Verfahren nach Anspruch 8,
**dadurch gekennzeichnet,**
**daß** das Abgas in der ersten und zweiten Abgasleitung zunächst über einen Oxidationskatalysator (9 und 9') dann über das Rußfilter (6 und 6') und anschließend über einen Stickoxid-Speicherkatalysator (10 und 10') geführt wird.

11. Abgasanlage eines Magermotors (1) mit mehreren Zylindern, wobei eine erste Abgasleitung (3) mit einer ersten Gruppe von Zylindern (2) und eine zweite Abgasleitung (3') mit einer zweiten Gruppe von Zylindern (2') verbunden ist und jede Abgasleitung ein Rußfilter (6 und 6') enthält und beide Abgasleitungen stromabwärts der Rußfilter in eine gemeinsamen Abgasleitung (5) münden,
**dadurch gekennzeichnet,**
**daß** die gemeinsame Abgasleitung einen Entstickungskatalysator (7) enthält.

12. Abgasanlage nach Anspruch 11,
**dadurch gekennzeichnet,**
**daß** vor jedem Rußfilter (6 und 6') ein Oxidationskatalysator (9 und 9') angeordnet ist.

13. Abgasanlage nach Anspruch 12,
**dadurch gekennzeichnet,**
**daß** hinter jedem Rußfilter (6 und 6') ein Stickoxid-Speicherkatalysator (10 und 10') angeordnet ist

14. Abgasanlage nach Anspruch 11,
**dadurch gekennzeichnet,**
**daß** vor und/oder hinter jedem Rußfilter (6 und 6') ein Stickoxid-Speicherkatalysator (10 und 10') angeordnet ist.

15. Abgasanlage nach einem der Ansprüche 11 bis 14,
**dadurch gekennzeichnet,**
**daß** der Entstickungskatalysator (7) ein SCR-Katalysator, ein Stickoxid-Speicherkatalysator oder ein HC-DeNOx-Katalysator ist.

16. Abgasanlage nach Anspruch 15,
**dadurch gekennzeichnet,**
**daß** der Entstickungskatalysator (7) ein SCR-Katalysator ist und daß in der gemeinsamen Abgasleitung (5) vor dem SCR-Katalysator eine Dosiereinrichtung (8) zur Eindüsung von Ammoniak oder einer zu Ammoniak zersetzlichen Verbindung angeordnet ist.

## Claims

1. Method for regenerating soot filters in the exhaust system of a lean-burn engine (1) having a plurality of cylinders, with a first exhaust line (3) receiving the exhaust gases from a first group of cylinders (2) and a second exhaust line (3') receiving the exhaust gases from a second group of cylinders (2'), and with each exhaust line comprising a soot filter (6 and 6') and with both exhaust lines opening out downstream of the soot filter into a common exhaust line (5) and the exhaust gases of the two groups of cylinders being mixed, with identical exhaust-gas conditions prevailing in both exhaust lines during normal operation of the engine, and with the soot which is generated by the engine being filtered out of the exhaust gas by the soot filters,
**characterized**
**in that** the two soot filters (6 and 6') are regenerated at different times by means of an increase in the exhaust-gas temperature in the associated exhaust line to a soot ignition temperature while normal exhaust-gas conditions continue to prevail in the other exhaust line, such that the exhaust-gas temperature in the common exhaust line (5) assumes a mean temperature between the exhaust-gas temperature of normal operation and the exhaust-gas temperature during regeneration, and the nitrogen oxides which are contained in the mixed exhaust-gas flow are converted on a denitrogenization catalytic converter (7).

2. Method according to Claim 1,
**characterized**
**in that**, for the regeneration of the soot filters, the exhaust-gas temperature is raised to the soot ignition temperature by engine-internal measures.

3. Method according to Claim 2,
**characterized**
**in that** the exhaust-gas temperature is raised to the soot ignition temperature by means of the post-injection of fuel, by means of a late combustion position, by means of a multi-stage combustion or by means of a combination of said measures.

4. Method according to Claim 1,
**characterized**
**in that**, for the regeneration of the soot filters, the exhaust-gas temperature is raised to the soot ignition temperature by means of external heating.

5. Method according to Claim 1,
**characterized**
**in that** the soot filters are coated with an oxidation catalytic converter and the exhaust-gas temperature is raised to the soot ignition temperature by means of the injection of hydrocarbons or their decomposition products upstream of the respective soot filter, and the catalytic combustion of the hydrocarbons or their decomposition products on the oxidation catalytic converter.

6. Method according to Claim 1,
**characterized**
**in that** the first and second exhaust lines comprise, upstream of the soot filters, in each case one oxidation catalytic converter and the exhaust-gas temperature is raised to the soot ignition temperature by means of the injection of hydrocarbons or their decomposition products upstream of the oxidation catalytic converter, and the catalytic combustion of the hydrocarbons or their decomposition products on the oxidation catalytic converter.

7. Method according to Claim 1,
**characterized**
**in that** the soot ignition temperature is reduced by coating the soot filters (6 and 6') with a soot ignition coating.

8. Method according to Claim 1,
**characterized**
**in that** the nitrogen oxides in the common exhaust line are removed by means of an SCR catalytic converter, a nitrogen oxide storage catalytic converter or an HC-DeNOx catalytic converter as a denitrogenization catalytic converter.

9. Method according to Claim 1,
**characterized**
**in that** the exhaust gas in the first and second exhaust lines is conducted firstly across an oxidation catalytic converter (9 and 9') and subsequently across the soot filter (6 and 6').

10. Method according to Claim 8,
**characterized**
**in that** the exhaust gas in the first and second exhaust lines is conducted firstly across an oxidation catalytic converter (9 and 9'), then across the soot filter (6 and 6') and subsequently across a nitrogen oxide storage catalytic converter (10 and 10').

11. Exhaust system for a lean-burn engine (1) having a plurality of cylinders, with a first exhaust line (3) being connected to a first group of cylinders (2) and with a second exhaust line (3') being connected to a second group of cylinders (2'), and with each exhaust line comprising a soot filter (6 and 6') and with both exhaust lines opening out downstream of the soot filter into a common exhaust line (5),
**characterized**
**in that** the common exhaust line comprises a denitrogenization catalytic converter (7).

12. Exhaust system according to Claim 11,
**characterized**
**in that** an oxidation catalytic converter (9 and 9') is arranged upstream of each soot filter (6 and 6').

13. Exhaust system according to Claim 12,
**characterized**
**in that** a nitrogen oxide storage catalytic converter (10 and 10') is arranged downstream of each soot filter (6 and 6').

14. Exhaust system according to Claim 11,
**characterized**
**in that** a nitrogen oxide storage catalytic converter (10 and 10') is arranged upstream and/or downstream of each soot filter (6 and 6').

15. Exhaust system according to one of Claims 11 to 14,
**characterized**
**in that** the denitrogenization catalytic converter (7) is an SCR catalytic converter, a nitrogen oxide storage catalytic converter or an HC-DeNOx catalytic converter.

16. Exhaust system according to Claim 15,
**characterized**
**in that** the denitrogenization catalytic converter (7) is an SCR catalytic converter and in that a dosing device (8) for the injection of ammonia, or of a compound which breaks down into ammonia, is arranged in the common exhaust line (5) upstream of the SCR catalytic converter.

## Revendications

1. Procédé de régénération de filtres à particules de l'installation de gaz d'échappement d'un moteur (1) alimenté en conditions pauvres et doté de plusieurs cylindres,
un premier conduit (3) de gaz d'échappement reprenant les gaz d'échappement d'un premier groupe de cylindres (2) et un deuxième conduit (3') de gaz d'échappement les gaz d'échappement d'un deuxième groupe de cylindres (2'),
chaque conduit de gaz d'échappement contenant un filtre à particules (6 et 6') et les deux conduits de gaz d'échappement débouchant en aval du filtre à particules dans un conduit (5) commun pour gaz d'échappement,
les gaz d'échappement des deux groupes de cylindres étant mélangés,
des conditions identiques régnant dans les gaz d'échappement des deux conduits de gaz d'échappement lorsque le moteur fonctionne normalement et les particules produites par le moteur étant séparées des gaz d'échappement par les filtres à particules, **caractérisé en ce que**
les deux filtres à particules (6 et 6') sont régénérés en décalage temporel mutuel en rehaussant jusqu'à une température de combustion des particules la température des gaz d'échappement dans le conduit associé de gaz d'échappement pendant que des conditions normales règnent dans les gaz d'échappement de l'autre conduit de gaz d'échappement, de telle sorte que la température des gaz d'échappement dans le conduit commun (5) de gaz d'échappement soit la température moyenne entre la température des gaz d'échappement en fonctionnement normal et la température des gaz d'échappement en régénération, et
**en ce que** les oxydes d'azote que contient l'écoulement mélangé de gaz d'échappement sont convertis dans un catalyseur (7) de décomposition des oxydes d'azote.

2. Procédé selon la revendication 1, **caractérisé en ce que** la température des gaz d'échappement utilisés pour la régénération des filtres à particules est rehaussée à la température de combustion des particules par des dispositions prises sur le moteur.

3. Procédé selon la revendication 2, **caractérisé en ce que** la température de gaz d'échappement est rehaussée jusqu'à la température de combustion des particules par post-injection de carburant, en retardant la position de combustion, en étageant la combustion ou en combinant ces dispositions.

4. Procédé selon la revendication 1, **caractérisé en ce que** pour la régénération des filtres à particules, la température des gaz d'échappement est rehaussée jusqu'à la température de combustion des particules en appliquant un chauffage externe.

5. Procédé selon la revendication 1, **caractérisé en ce que** les filtres à particules sont revêtus d'un catalyseur d'oxydation et **en ce que** la température des gaz d'échappement est rehaussée jusqu'à la température de combustion des particules par injection d'hydrocarbures ou de leurs produits de décomposition en amont du filtre à particules concerné et par combustion catalysée des hydrocarbures ou de leurs produits de décomposition sur le catalyseur d'oxydation.

6. Procédé selon la revendication 1, **caractérisé en ce que** le premier et le deuxième conduit de gaz d'échappement présentent chacun un catalyseur d'oxydation en amont des filtres à particules et **en ce que** la température des gaz d'échappement est rehaussée jusqu'à la température de combustion des particules par injection d'hydrocarbures ou de leurs produits de décomposition en amont du catalyseur d'oxydation concerné et par combustion catalysée des hydrocarbures ou de leurs produits de décomposition sur le catalyseur d'oxydation.

7. Procédé selon la revendication 1, **caractérisé en ce que** la température de combustion des particules est abaissée en revêtant les filtres à particules (6 et 6') d'un revêtement de combustion des particules.

8. Procédé selon la revendication 1, **caractérisé en ce que** les oxydes d'azote que contient le conduit commun de gaz d'échappement sont éliminés par un catalyseur SCR, un catalyseur-accumulateur d'oxydes d'azote ou un catalyseur HC-dé-NOx servant de catalyseur de décomposition des oxydes d'azote.

9. Procédé selon la revendication 1, **caractérisé en ce que** les gaz d'échappement présents dans le premier et le deuxième conduit de gaz d'échappement sont d'abord amenés sur un catalyseur d'oxydation (9 et 9') et ensuite sur le filtre à particules (6 et 6').

10. Procédé selon la revendication 8, **caractérisé en ce que** les gaz d'échappement présents dans le premier et le deuxième conduit de gaz d'échappement sont d'abord amenés sur un catalyseur d'oxydation (9 et 9'), ensuite sur le filtre à particules (6 et 6') et enfin sur un catalyseur-accumulateur d'oxydes d'azote (10 et 10').

11. Installation de gaz d'échappement d'un moteur (1) fonctionnant en conditions pauvres et doté de plusieurs cylindres, dans laquelle
un premier conduit (3) de gaz d'échappement est relié à un premier groupe de cylindres (2) et un deuxième conduit de gaz d'échappement (3') à un deuxième groupe de cylindres (2'),
chaque conduit de gaz d'échappement contenant un filtre à particules (6 et 6') et les deux conduits de gaz d'échappement débouchant dans un conduit commun (5) de gaz d'échappement en aval des filtres à particules, **caractérisée en ce que**
le conduit commun de gaz d'échappement contient un catalyseur (7) de décomposition des oxydes d'azote.

12. Installation de gaz d'échappement selon la revendication 11, **caractérisée en ce qu'**un catalyseur d'oxydation (9 et 9') est disposé en amont de chaque filtre à particules (6 et 6').

13. Installation de gaz d'échappement selon la revendication 12, **caractérisée en ce qu'**un catalyseur-accumulateur d'oxydes d'azote (10 et 10') est disposé en aval de chaque filtre à particules (6 et 6').

14. Installation de gaz d'échappement selon la revendication 11, **caractérisée en ce qu'**un catalyseur-accumulateur d'oxydes d'azote (10 et 10') est disposé en amont et/ou en aval de chaque filtre à particules (6 et 6').

15. Installation de gaz d'échappement selon l'une des revendications 1 à 14, **caractérisée en ce que** le catalyseur (7) de décomposition des oxydes d'azote est un catalyseur SCR, un catalyseur-accumulateur d'oxydes d'azote ou un catalyseur HC-dé-NOx.

16. Installation de gaz d'échappement selon la revendication 15, **caractérisée en ce que** le catalyseur (7) de décomposition des oxydes d'azote est un catalyseur SCR et **en ce qu'**un dispositif de dosage (8) qui injecte de l'ammoniac ou un composé qui se décompose en ammoniac est disposé dans le conduit commun (5) de gaz d'échappement en amont du catalyseur SCR.
